Europäisches Patentamt

European Patent Office

Office européen des brevets

(11) Veröffentlichungsnummer: **0 459 327 A1**

## (12) EUROPÄISCHE PATENTANMELDUNG

(21) Anmeldenummer: **91108521.5**

(22) Anmeldetag: **25.05.91**

(51) Int. Cl.⁵: **F02C 3/02**

(30) Priorität: **31.05.90 CH 1845/90**

(43) Veröffentlichungstag der Anmeldung:
**04.12.91 Patentblatt 91/49**

(84) Benannte Vertragsstaaten:
**AT BE CH DE ES FR GB IT LI NL SE**

(71) Anmelder: **ASEA BROWN BOVERI AG**

**CH-5401 Baden(CH)**

(72) Erfinder: **Althaus, Rolf, Dr.**
**Flurhofstrasse 11**
**CH-9000 St. Gallen(CH)**
Erfinder: **Keller, Jakob, Dr.**
**Plattenstrasse 8**
**CH-5605 Dottikon(CH)**

(54) Gasturbinenanordnung.

(57) Die Gasturbinenanlage weist eine Gasturbine mit zwei Stufen (HD, MD) unterschiedlichen Druckes auf sowie einen als Oberstufe der Gasturbine geschalteten Energietauscher (ET). Im Energietauscher (ET) komprimierte Luft hohen Druckes wird einem auf den Energietauscher (ET) wirkenden Brenner (NB) sowie einer Brennkammer (BK) der Gasturbine zugeführt. Vom Ernergietauscher (ET) und einer Stufe hohen Druckes (HD) der Gasturbine abgegebene Treibgase werden einer Stufe niederen Druckes (MD) der Gasturbine zugeführt.

Die Gasturbinenanordnung soll sich durch einfachen Aufbau und hohen Wirkungsgrad auszeichnen und in ihrer Betriebsweise etwa im Hinblick auf schnelle Laständerungen vorteilhaft beeinflussbar sein.

Dies wird durch folgende Massnahmen erreicht:
- in einem komprimierte Luft hohen Druckes führenden Leitungszweig (z.B. HD2) ist ein Heizelement (z.B. H2) vorgesehen,
- in einem vom Energietauscher (ET) abgehenden, treibgasführenden Leitungszweig (z.B. MD1) ist ein Kühlelement (z.B. K1) vorgesehen,
- Heiz (z.B. H2) und Kühlelement (z.B. K1) sind zur Rekuperation oder Regeneration von Wärme als Wärmetauscher (z.B. W12) zusammengeschaltet.

FIG.1

## TECHNISCHES GEBIET

Bei der Erfindung wird ausgegangen von einer Gasturbinenanordnung nach dem Oberbegriff von Patentanspruch 1. Eine solche Gasturbinenanordnung weist eine Druckwellenmaschine auf, in der unter der Wirkung eines Treibgases vorverdichtete Luft auf hohen Druck gebracht und als Verbrennungsluft einer Brennkammer einer Gasturbine zugeführt wird. Aus der Druckwellenmaschine austretendes Treibgas niederen Druckes wird einer Stufe niederen Druckes der Gasturbine zugeführt, hingegen in der Brennkammer erzeugtes Treibgas hohen Druckes einer Hochdruckstufe der Gasturbine. Gegenüber einer Gasturbinenanordnung, bei der die zur Erzeugung des Treibgases hohen Druckes erforderliche Luft ausschliesslich in einem von der Gasturbine angetriebenen Verdichter erzeugt wird, weist die eingangs genannte Gasturbinenanordnung einen wesentlich höheren Wirkungsgrad auf.

## STAND DER TECHNIK

Eine Gasturbinenanordnung der eingangs genannten Art ist beispielsweise aus CH 669 432 A5 bekannt. Bei dieser Gasturbinenanordnung wird in einem von einer Gasturbine angetriebenen Kompressor vorverdichtete Luft einer Druckwellenmaschine zugeführt und dort auf hohen Druck gebracht. Hierzu wird die Druckwellenmaschine von heissem Treibgas nit hohem Druck durchströmt, welches einen Teil seiner Energie an die vorverdichtete Luft abgibt. Die vorverdichtete Luft nimmt dabei den Druck des heissen Treibgases vor dem Energieaustausch auf, während der Druck des Treibgases beim Energieaustausch auf den Druck der vorverdichteten Luft abfällt. Die hochverdichtete Luft wird einer Brennkammer zugeführt, in der Treibgas hohen Druckes für eine Hochdruckstufe der Gasturbine erzeugt wird, wohingegen das nach dem Energieaustausch aus dem Energietauscher tretende Treibgas an eine Stufe niederen Druckes der Gasturbine gelangt, in der es sich mit Treibgas mischt, welches nach Teilentspannung von der Hochdruckstufe abgegeben wird.

## DARSTELLUNG DER ERFINDUNG

Die Erfindung, wie sie im Patentanspruch 1 angegeben ist, löst die Aufgabe, eine Gasturbinenanordnung anzugeben, die sich durch einfachen Aufbau und einen hohen Wirkungsgrad auszeichnet und deren Betriebsweise etwa im Hinblick auf schnelle Laständerungen vorteilhaft beeinflussbar ist.

Die Gasturbinenanordnung nach der Erfindung zeichnet sich dadurch aus, dass es durch einfache und kostengünstige Massnahmen gelingt, den Betrieb dieser Anordnung günstig zu beeinflussen. Es lassen sich hohe Teillastwirkungsgrade erzielen oder schnelle Laständerungen durchführen. Die Anordnung kann mit einer vergleichsweise geringen Anzahl von Schaltvorgängen betrieben werden. Zudem wird der Ausstoss an unerwünschten Reaktionsprodukten im Abgas drastisch reduziert. Hierbei ist es von besonderem Vorteil, dass dazu vorgesehene und als Rekuperator oder Regenerator wirkende Wärmeaustauscher in äusserst kostengünstiger Weise bereitgestellt werden können. Die heissgasführenden Verrohrungen des unteren Druckniveaus des Energietauschers werden ja im allgemeinen gekühlt und können nun ohne grossen Mehraufwand als Rekuperator- oder Regeneratorelement ausgebildet werden. Zudem liegen das obere und das untere Druckniveau eines als Oberstufe einer Gasturbine eingesetzten Energietauschers im allgemeinen derart hoch, dass die Volumina solcher Rekuperatoren klein bemessen werden können. Die Rekuperatoren oder Regeneratoren benötigen daher wenig Raum und können zugleich preiswert hergestellt werden.

Da die Regeneratoren und Rekuperatoren nur zwischen dem oberen und unteren Druckniveau des Energietauschers eingesetzt sind, kann die Gasturbinenanordnung auch eine Gasturbine aufweisen, deren Abwärme zum Betrieb einer Dampfturbine verwendet wird (Kombischaltung Gasturbine-Abwärmedampfturbine).

## KURZE BESCHREIBUNG DER ZEICHNUNG

Die Erfindung wird nachfolgend anhand von Ausführungsbeispielen näher erläutert, die in Zeichnungen dargestellt sind. Hierbei zeigt:

Fig. 1 ein Blockschaltbild einer Gasturbinenanordnung nach der Erfindung, bei dem alle Rekuperatoren oder Regeneratoren angegeben sind, die in sinnvoller Weise zwischen den Zweigen des oberen und des unteren Druckniveaus eines in dieser Anordnung vorgesehenen Energietauschers eingesetzt sind, und

Fig.2-6 Blockschaltbilder weiterer Gasturbinenanordnungen nach der Erfindung, bei denen in Abänderung der Anordnung nach Fig. 1 jeweils lediglich zwischen besonders bevorzugten Zweigen des oberen und unteren Druckniveaus des Energietauschers Rekuperatoren oder Regeneratoren eingesetzt sind.

## WEG ZUR AUSFÜHRUNG DER ERFINDUNG

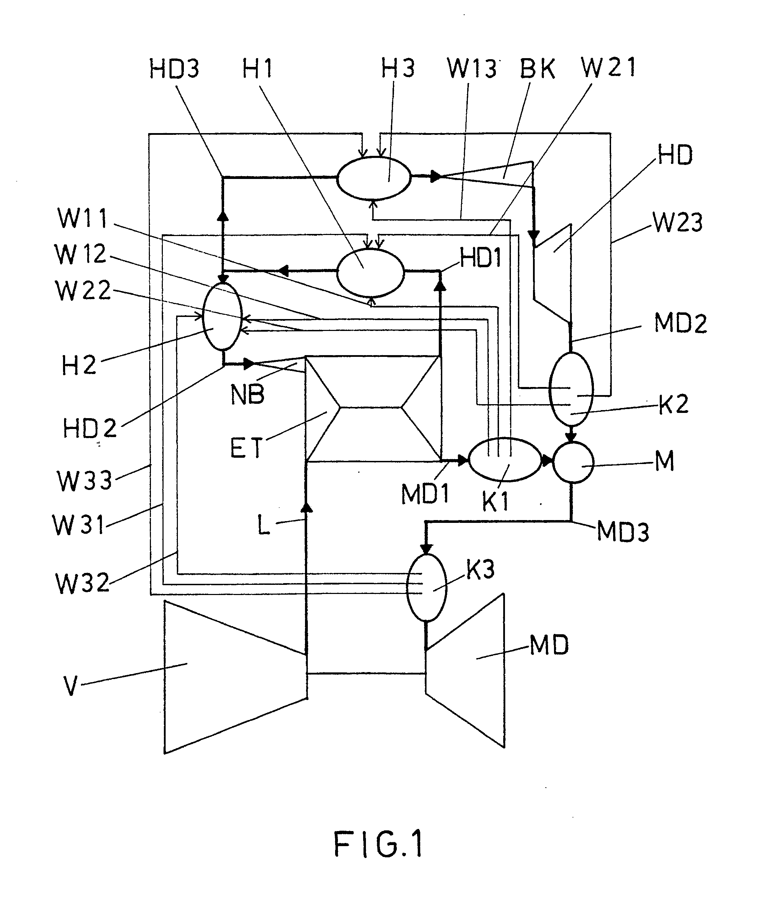

Die in Fig. 1 als Blockschaltbild dargestellte Gasturbinenanordnung enthält eine Gasturbine mit einer Hochdruckstufe HD und einer Stufe MD niederen Druckes, beispielsweise einer Mitteldruckstufe, sowie einen Energietauscher ET. Die Gasturbine kann eine einfache Arbeitsturbine mit zwei und mehr Stufen sein, kann aber auch die Basisgasturbine einer Kombischaltung von Gasturbine und Abwärmedampfturbine sein, wohingegen der Energietauscher mit Vorteil als Druckwellenmaschine ausgebildet ist. Dem Energietauscher ET wird aus einem Verdichter V über eine Leitung L vorverdichtete Luft zugeführt, welche sich auf einer Temperatur von beispielsweise 240 °C befindet und einen Druck von beispielsweise 6 bar aufweist. Diese Luft wird im Energietauscher ET vorverdichtet und hierbei auf eine Temperatur von beispielsweise 420 °C und einen Druck von beispielsweise 12 bar gebracht. Die verdichtete Luft wird vom Energietauscher ET über einen Leitungszweig HD1 an eine Leitungsverzweigung geführt und dort in zwei Teilluftströme aufgeteilt, von denen der eine über einen Leitungszweig HD2 einem auf den Energietauscher ET wirkenden Brenner NB und ein etwa vergleichbar oder grösser bemessener Teilluftstrom über einen Leitungszweig HD3 einer auf die Hochdruckstufe HD der Gasturbine wirkende Brennkammer BK zugeführt wird.

Im Brenner NB erzeugtes Treibgas weist eine vergleichsweise hohe Temperatur von beispielsweise 1800 °C auf und befindet sich bei Verwendung eines isobar wirkenden Brenners auf einem der zugeführten Luft entsprechenden Druck von beispielsweise 12 bar. Dieses Treibgas tauscht im Energietauscher ET einen grossen Teil seiner Energie mit der durch die Leitung L zugeführten, vorverdichteten Luft aus und wird nach dem Energieaustausch durch einen Leitungszweig MD1 zu einem Mischer M geleitet. Beim Austritt aus dem Energietauscher weist das im Leitungszweig MD1 geführte Treibgas noch eine vergleichsweise hohe Temperatur von beispielsweise 1300 °C und einen der vorverdichteten Luft entsprechenden Druck von beispielsweise 6 bar auf. In der Brennkammer BK erzeugtes Treibgas weist eine Temperatur von beispielsweise 1000 °C und einen der vorverdichteten Luft entsprechenden Druck von beispielsweise 12 bar auf. Dieses Treibgas wird in der Hochdruckstufe HD der Gasturbine teilentspannt. Das teilentspannte, auf einer vergleichsweise tiefen Temperatur von beispielsweise 800 °C befindliche Treibgas weist einen der vorverdichteten Luft entsprechenden Druck von beispielsweise 6 bar auf. Es wird von der Hochdruckstufe HD über einen Leitungszweig MD2 zum Mischer M geführt, in dem es mit dem in Leitungszweig MD1 herantransportierten Treibgas vermischt und danach über einen Leitungszweig MD3 der Stufe MD niederen Druckes der Gasturbine zugeführt wird. Es weist dann entsprechend dem zur Hochdruckstufe HD der Gasturbine geführten Treibgas eine von der Gasturbine tolerierte Temperatur von beispielsweise 1000 °C auf.

In den Leitungszweigen HD1, HD2 bzw. HD3 der oberen Druckstufe des Energietauschers ET befinden sich jeweils Heizelemente H1, H2 bzw. H3, in den Leitungszweigen MD1, MD2 bzw. MD3 der unteren Druckstufe des Energietauschers ET jeweils Kühlelemente K1, K2 bzw. K3. Jedes der Heizelemente ist mit einem der Kühlelemente zu einem Wärmetauscher zusammengeschaltet. Das Kühlelement K1 und die Heizelemente H1, H2 bzw. H3 bilden die Wärmetauscher W11, W12 bzw. W13. Entsprechend das Kühlelement K2 und die Heizelemente H1, H2 und H3 die Wärmetauscher W21, W22 bzw. W23 und das Kühlelement K3 und die Heizelemente H1, H2 und H3 die Wärmetauscher W31, W32 bzw. W33.

Bei der Gasturbinenanordnung nach Fig. 1 werden die in den Leitungszweigen MD1, MD2 und MD3 geführten heissen Treibgase durch die Kühlelemente K1, K2 und K3 auf Temperaturen gebracht, bei denen die Bildung unerwünschter Schadstoffe, wie etwa von $NO_x$, weitgehend vermieden wird. Die von den Kühlelementen aufgenommene Wärme wird in den Wärmetauschern zu den Heizelementen transportiert und dient dort der Aufheizung der in den Leitungszweigen HD1, HD2 und HD3 geführten verdichteten Luft. Hierdurch werden die Heizleistungen der Brennkammer BK und des Brenners NB verbessert und damit der Wirkungsgrad der Gasturbinenanordnung wirksam erhöht. Dies ist von besonderem Vorteil, wenn als Gasturbinenanordnung lediglich eine Kombination eines Energietauschers mit einer Arbeitsturbine vorgesehen ist. Es werden dann selbst bei geringem Druckabfall über dem Energietauscher ET vergleichsweise hohe Wirkungsgrade erreicht.

Mit der Gasturbinenanordnung nach Fig. 1 ist es grundsätzlich immer möglich, einen Prozess bei vorgegebenen Grenztemperaturen der Gasturbinen und vorgegebenen Druckverhältnissen auf einen gewünschten Lastpunkt (z.B. Vollast) perfekt abzustimmen. Ohne den zusätzlichen Freiheitsgrad, der dank des Einsatzes der als Rekuperatoren oder Regeneratoren wirkenden Wärmetauscher erreicht wird, müssten die Druckverhältnisse auf die Turbinengrenztemperaturverhältnisse abgestimmt werden.

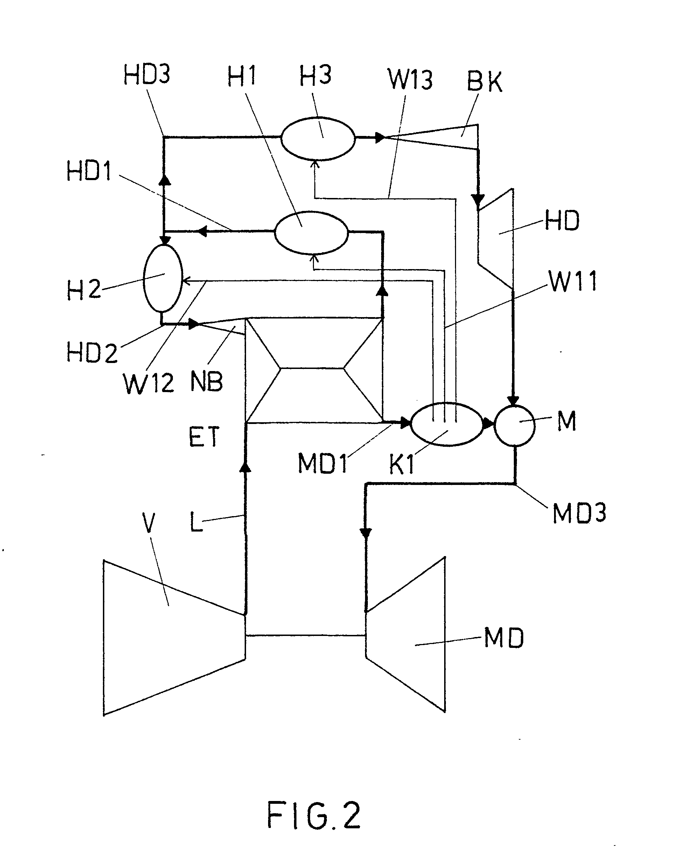

In den Figuren 2 - 6 sind Gasturbinenanordnungen nach der Erfindung dargestellt, bei denen in Abänderung der Anordnung nach Fig. 1 jeweils lediglich zwischen besonders bevorzugten Leitungszweigen des oberen und unteren Druckniveaus des Energietauschers als Rekuperatoren oder Regeneratoren wirkende Wärmetauscher eingesetzt sind. Bei diesen Gasturbinenanordnungen und bei der Gasturbinenanordnung nach Fig. 1 beziehen sich gleiche Bezugszeichen auf gleichwirkende Teile.

Mit einfachen Mitteln eine erhebliche Herabsetzung von $NO_x$-Emissionen wird bei den Ausführungsformen gemäss der Figuren 2 - 4 bereits dadurch erreicht, dass die im Leitungszweig MD1 geführten besonders heissen Treibgase unmittelbar nach ihrer Bildung im Energietauscher ET abgekühlt werden.

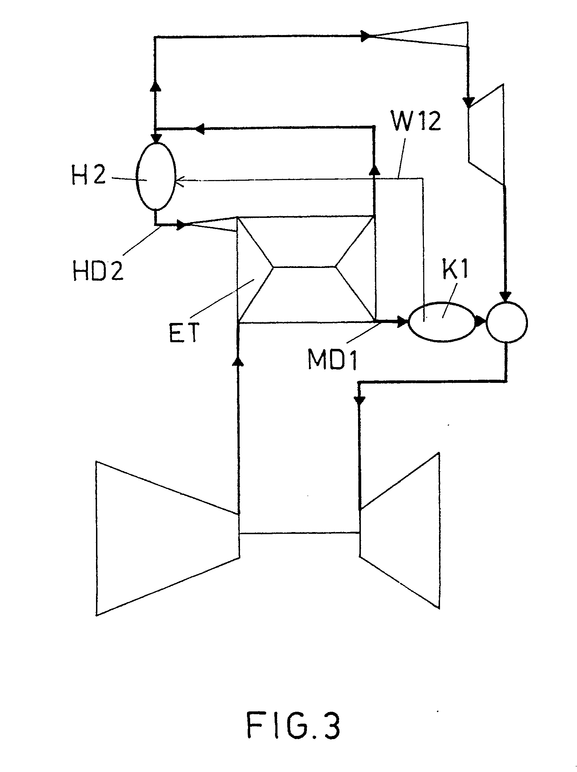

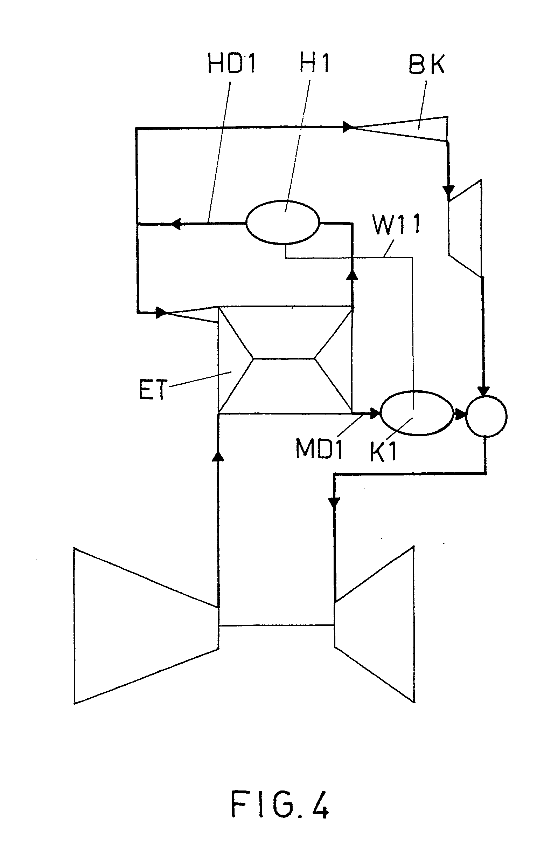

Zu diesem Zweck wird bei der Ausführungsform gemäss Fig. 2 die vom Kühlelement K1 im Leitungszweig MD1 aufgenommene Wärme durch die Wärmetauscher W11, W12 und W13 an alle Heizelemente H1, H2 und H3 des oberen Druckniveaus des Energietauschers ET geführt. Hierdurch werden auch grosse Treibgasmengen rasch abgekühlt und die $NO_x$-Emission erheblich reduziert. Eine ausreichende Reduktion der $NO_x$-Bildungwird im allgemeinen bereits dann ereicht, wenn wie bei den Ausführungsformen nach den Figuren 3 und 4 die vom Kühlelement K1 aufgenommene Wärme lediglich einem Heizelement, beispielsweise H1 oder H2, zugeführt wird.

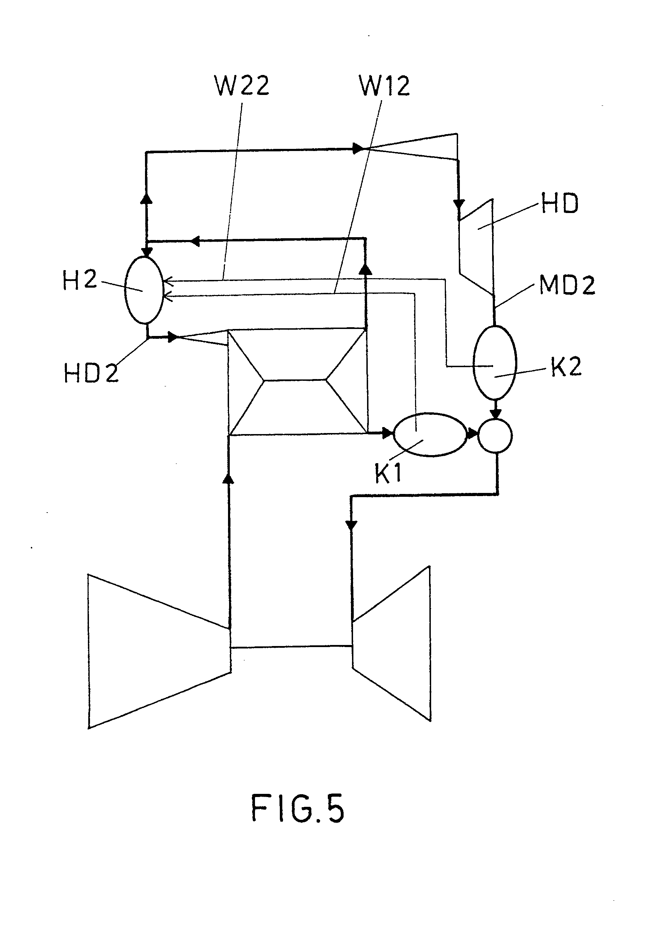

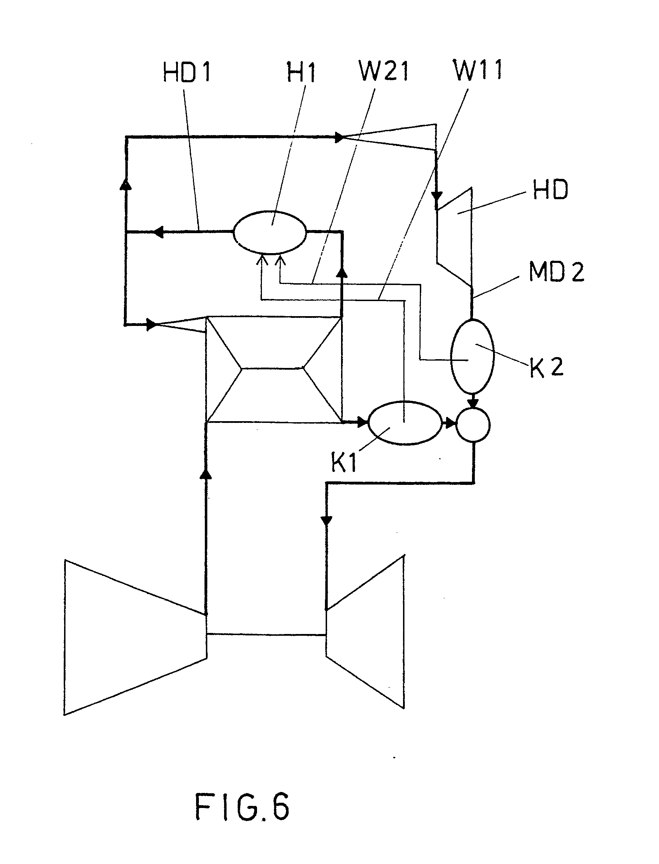

Aus kühltechnischen Gründen sind die Ausführungsformen gemäss den Figuren 5 und 6 besonders zu bevorzugen. Bei diesen Ausführungsformen wird mit einfachen Mitteln eine besonders starke Wärmeübertragung in die Leitungszweige HD2 bzw. HD1 erreicht. Konzentriert sich wie bei dem Ausführungsbeispiel gemäss Fig. 5 dargestellt ist die Wärmeübertragung in den Leitungszweig HD2, so kann der Brenner NB als klein dimensierter Nachbrenner ausgebildet sein. Bei dieser Gasturbinenanordnung ist eine Regelung im gesamten Lastbereich möglich, die nur die Brennstoffzufuhr zur Brennkammer BK vor dem Hochdruckteil HD der Gasturbine verändert.

Zur Erreichung einer raschen Leistungsänderung der Gasturbinenanordnung nach der Erfindung ist es vorteilhaft, den Brenner NB im Hochdruckzweig HD2 regulierbar auszubilden. Dies lässt sich besonders kostengünstig ausführen, wenn dieser Brenner - wie bei der Ausführungsform gemäss Figur 5 - klein dimensiert werden kann.

## Patentansprüche

1. Gasturbinenanordnung mit einer mindestens zwei Stufen unterschiedlichen Drucks (HD, MD) aufweisenden Gasturbine und einem als Oberstufe der Gasturbine geschalteten Energietauscher (ET), bei der im Energietauscher (ET) komprimierte Luft hohen Druckes einem auf den Energietauscher (ET) wirkenden Brenner (NB) und einer Stufe hohen Drucks (HD) der Gasturbine zugeführt wird, und bei der vom Energietauscher (ET) und der Stufe hohen Drucks (HD) abgegebene Treibgase einer Stufe niederen Drucks (MD) der Gasturbine zugeführt werden, dadurch gekennzeichnet, dass in mindestens einem die komprimierte Luft hohen Drucks führenden Leitungszweig (HD1, HD2, HD3) mindestens ein Heiz-(H1, H2, H3) und in mindestens einem vom Energietauscher (ET) abgehenden, treibgasführenden Leitungszweig (MD1, MD2, MD3) mindestens ein Kühlelement (K1, K2, K3) angeordnet ist, und dass das mindestens eine Heiz-(H1, H2, H3) und das mindestens eine Kühlelement (K1, K2, K3) zur Rekuperation oder Regeneration von Wärme als Wärmetauscher (W11, W12, W13; W21, W22, W23; W31, W32, W33) zusammengeschaltet sind.

2. Gasturbinenanlage nach Anspruch 1, dadurch gekennzeichnet, dass ein in einem vom Energietauscher (ET) abgehenden, treibgasführenden Leitungszweig (MD1) angeordnetes Kühlelement (K1) und ein in einem dem Energietauscher (ET) und/oder einer Brennkammer (BK) der Gasturbine komprimierte Luft hohen Druckes zuführenden Leitungszweig (HD1, HD2, HD3) angeordnetes Heizelement (H1, H2, H3) als Wärmetauscher (W11, W12, W13) zusammengeschaltet sind. (Fig. 2)

3. Gasturbinenanlage nach Anspruch 1, dadurch gekennzeichnet, dass ein in einem vom Energietauscher (ET) abgehenden, treibgasführenden Leitungszweig (MD1) angeordnetes Kühlelement (K1) und ein in einem dem Energietauscher (ET) komprimierte Luft hohen Druckes zuführenden Leitungszweig (HD2) angeordnetes Heizelement (H2) als Wärmetauscher (W12) zusammengschaltet sind (Fig. 3).

4. Gasturbinenanlage nach Anspruch 1, dadurch gekennzeichnet, dass ein in einem vom Energietauscher (ET) abgehenden treibgasführenden Leitungszweig (MD1) angeordnetes Kühlelement (K1) und ein in einem dem Energietauscher (ET) und der Brennkammer (BK) der Gasturbine komprimierte Luft hohen Druckes zuführende Leitungszweig (HD1) angeordnetes Heizelement (H1) als Wärmetauscher (W11) zusammengeschaltet sind (Fig. 4).

5. Gasturbinenanlage nach einem der Ansprüche 3 oder 4, dadurch gekennzeichnet, dass eine in einem von der Stufe hohen Druckes (HD) der Gasturbine abgehenden, treibgasführenden Leitungszweig (MD2) angeordnetes weiteres Kühlelement (K2) und das Heizelement (H1; H2) als Wärmetauscher (W12, W22; W11, W21) zusammengeschaltet sind (Fig. 5, 6).

6. Gasturbinenanlage nach einem der Ansprüche 1 - 5, dadurch gekennzeichnet, dass das vom Energietauscher (ET) abgehende Treibgas nach Passieren des Wärmetauschers (z.B. W11) und das von der Stufe hohen Druckes (HD) der Gasturbine abgegebene Treibgas einem Mischer (M) zugeführt werden.

FIG.1

FIG.2

FIG.3

FIG.4

FIG.5

FIG.6

Europäisches
Patentamt

**EUROPÄISCHER
RECHERCHENBERICHT**

Nummer der Anmeldung

**EP 91 10 8521**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 801 341 (HAUBENWALLNER) <br> * Seite 2, Zeile 10 - Seite 7, Zeile 19; Figuren 1-4 * <br> – – – | 1-4 | F 02 C 3/02 |
| A | US-A-3 367 563 (HERTZBERG) <br> * Spalte 2, Zeile 62 - Spalte 3, Zeile 72; Figuren 1, 3 * <br> – – – | 1 | |
| A | CH-A-2 292 80 (BBC) <br> * Seite 2, Zeile 59 - Seite 3, Zeile 3; Figur 6 * <br> – – – | 1 | |
| A | GB-A-9 469 59 (BARNES) <br> * Seite 2, Zeile 38 - Seite 2, Zeile 56; Figuren 1, 2 * <br> – – – – – | 1 | |

| RECHERCHIERTE SACHGEBIETE (Int. Cl.5) |
|---|
| F 02 C <br> F 02 B |

Der vorliegende Recherchenbericht wurde für alle Patentansprüche erstellt

| Recherchenort | Abschlußdatum der Recherche | Prüfer |
|---|---|---|
| Den Haag | 14 August 91 | IVERUS D. |